# EUROPEAN PATENT SPECIFICATION

(11) **EP 0 964 620 B1**
(45) Date of publication and mention of the grant of the patent: **22.05.2002**
(21) Application number: 98906925.7
(22) Date of filing: 03.02.1998
(51) Int. Cl.: A23L 1/24, A23L 1/48, A23P 1/04, A23L 1/22, A23D 7/00

(54) **NON-FROZEN LOW-FAT FOOD EMULSIONS AND PROCESSES THEREFOR**
NICHTGEFRORENE FETTARME NÄHRUNGSMITTELN UND VERFAHREN ZUR HERSTELLUNG DERSELBEN
EMULSIONS ALIMENTAIRES NON CONGELEES A TENEUR REDUITE EN MATIERES GRASSES ET PROCEDES DE PREPARATION

(30) Priority: 10.02.1997 EP 97300835
(43) Date of publication of application: 22.12.1999
(73) Proprietor: UNILEVER N.V., 3013 AL Rotterdam (NL); UNILEVER PLC, London EC4P 4BQ (GB)
(72) Inventor: BROWN, Charles R.T., Unilever Res. Colworth Lab., Bedford MK44 1LQ (GB); HOMAN, Jennifer, E., Unilever Res. Colworth Lab.th, Bedford MK44 1LQ LQ (GB); JONES, Malcolm, Glyn, Unilever Res. Colworth Lab,, Bedford MK44 1LQ (GB); MALONE, Mark, Emmett, Unilever Res. Colworth Lab., Bedford MK44 1LQ (GB); NORTON, Ian, Timothy, Unilever Res. Colworth Lab., Bedford MK44 1LQ (GB)
(74) Representative: Wurfbain, Gilles L.
(86) International application number: EP9800645
(87) International publication number: WO9834501

(56) References cited:
- EP-A- 0 011 891
- EP-A- 0 250 623
- EP-A- 0 558 113
- EP-A- 0 646 323
- WO-A-90/00354
- US-A- 5 498 439

## Description

### Field of the Invention

The present invention relates to non-frozen low-fat microstructured food emulsions, particularly to non-frozen low-fat oil-in-water emulsions, and to processes for preparing these emulsions.

### Background Art

Although an increasing number of consumers prefer low-fat food products over full fat food products, it is difficult for manufacturers of low-fat products to replicate the desired flavour and fatty mouthfeel of full-fat products. This difficulty is particularly a problem in non-frozen low-fat oil-in-water emulsions such as dressings.

It has been demonstrated that lowering the fat content of foods gives rise to flavour imbalance, as the rate of flavour release is greater in fat-reduced foods; in this respect, reference is made to an article by Shamil et al in Food Quality and Preference 1991/2, 3 (1) 51-60 entitled "Flavour release and perception in reduced-fat foods".

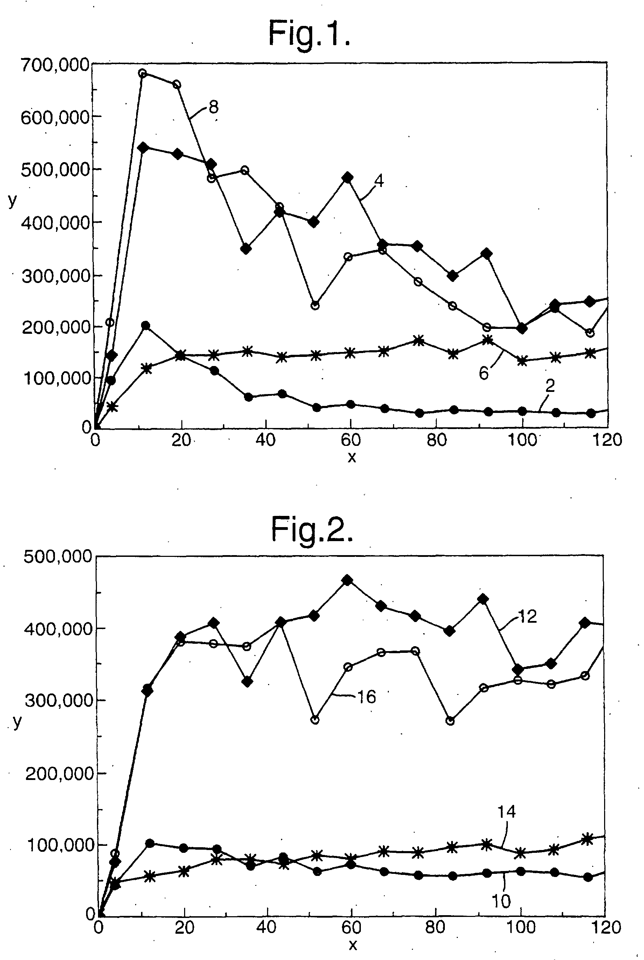

The greater rate of flavour release in reduced-fat oil-in-water food emulsions is demonstrated by the present inventors in figure 1, which is a graph of profiles of flavour intensity against time for dressings having different levels of fat (see in particular line 4 (traditional zero fat dressing) and line 6 (traditional 55 wt% fat dressing)).

During oral processing, full-fat (eg 55wt% fat) dressings exhibit a gradual build up of flavour to a low peak of maximum flavour impact, followed by a slow dissipation of flavour. In contrast, traditional very low-fat/zero-fat (0.85% fat) dressings exhibit a rapid dissipation of flavour creating a very high peak of maximum flavour impact at an early stage of oral processing.

The profile exhibited by full-fat dressings equates to a taste and mouthfeel that are preferred by consumers: the profile exhibited by low-fat dressings equates to a flavour which is initially too intense, with no pleasing aftertaste.

Many important flavour molecules are lipophilic and hydrophobic. As fat levels are reduced in oil-in-water emulsions, a greater proportion of these flavour molecules are found in the water phase. When the emulsion is broken down, eg in the mouth during eating, the hydrophobic nature of the flavour molecules results in their rapid release into nasal airspace.

Developments in flavour technology have resulted in flavour molecules being encapsulated to control flavour release and to stabilise and protect the molecules. Commonly-used encapsulation techniques include spray-drying, bed fluidisation and coacervation. (See the reference "Encapsulation and Controlled Release" by Karsa and Stephensen, Royal Soc Chem, ISBN 0.85/86-6/5-8.)

These techniques involve entrapping a flavour molecule within a covering or microcapsule. The resulting encapsulated product is often in the form of small dry particles, which are added to foodstuffs. Upon heating or eating the foodstuffs, the particles are thermally or physically broken down to release the flavour molecules. The release is normally rapid.

US 5498439 discloses encapsulating flavour oils in a colloid gel, which is made from water and animal protein polymers or plant polysaccharides. The flavour oil is mixed with the gel components under high shear pressure to create a stable colloid gel matrix, in which the flavour oil is physically encapsulated and retained by the hydrophilic. nature of the gel. A solution of the encapsulated flavour oil may be injected into meat to impart flavour thereto.

WO 90/00354 relates to low fat food products in which fat components have been replaced by non-lipid fat substitutes such as proteinaceous macrocolloids. Fat globules serve as a flavour delivery system for fat soluble flavour compounds, while at the same time adding minimal amounts of fat.

EP 0 558 113-A1 discloses water-continuous emulsions in which the aqueous phase consists of a gelling polysaccharide in the form of a microgel.

The present invention seeks to provide a non-frozen low-fat food emulsion having a rate of flavour release which is comparable to that of a full-fat non-frozen food emulsion, thereby creating a non-frozen low-fat food emulsion having the texture and flavour of a non-frozen full-fat food emulsion.

### Summary of the Invention

According to the present invention there is provided a non-frozen low-fat microstructured food emulsion comprising a continuous aqueous phase and a dispersed phase which comprises fat particles, gel particles and fat-soluble flavour molecules, wherein substantially all of the fat particles are located within the gel particles, and wherein at least 35% of the flavour molecules are located in a plurality of the gel particles to thereby delay the rate of release of the flavour molecules from the emulsion. The actual amount of flavour molecules which is located in the gel particles will depend on the oil/water partition coefficient of the flavour molecules concerned. In the above, it is preferred that a plurality (i.e. more than 50 %) of the flavour molecules are located in a plurality of the gel particles (which may be the case when the flavour molecule has a better solubility in oil than in water). The higher the percentage of the flavour molecules that is located in the gel particles, the better the dealyed release is obtained.

For the purpose of the present invention, fat-soluble flavour molecules include flavour molecules which are totally soluble in fat or oil and flavour molecules which are only partially soluble in fat.

Also, it is herein to be understood that the present invention is limited (application in) to non-frozen emulsions, such as dressings, mayonaise, spreads; etcetera.

The gel particles are prepared from one or more food grade gel-forming biopolymers, preferably selected from the group consisting of galactans (eg agar, carrageenans, furcelleran), galactomannans (eg guar gum, locust bean gum, tara gum, fenugreek), glucomannans (eg konjac mannan), galacturonates (eg pectins), glucans (eg starches), uronates (eg alginate), exopolysaccharides (eg xanthan, gellan), natural gum exudates (eg gum acacia, gum arabic), gelatin and mixtures thereof.

Mixtures of proteins and polysaccharides are preferred as they may interact associatively, dissociatively or synergistically.

The non-frozen low-fat emulsion of the present invention may comprise between 0 and 30 wt% fat. Preferably the amount of fat is less than 10 wt% fat, more preferably less than 5 wt% fat. In a preferred embodiment, the emulsion comprises at least 0.01 wt% fat, more preferably at least 0.5 wt%.
Emulsions having less than 3 wt% fat are also preferred: this very low level of fat are legitimately described as fat-free or zero-fat in many countries.

For the purpose of the present invention, the definition of fat includes liquid oil, crystallising fat blends and fat mimics such as sucrose polyesters.

When crystallising fat blends are used, enhanced control of flavour molecule transfer rates and additional textural benefits may be obtained.

The non-frozen low-fat emulsion of the present invention may comprise from 0.1 to 99% by volume of gel particles, preferably from 5 to 50% by volume of gel particles. The gel particles may confer fat-like textural properties to the low-fat emulsion; in this respect, the emulsion preferably comprises from 20 to 99% by volume of gel particles.

The gel particles may have a size of from at least 30, preferably at least 50, more preferably at least 100 microns to less than 5000 microns, preferably less than 1000 microns, more preferably less than 500 microns. Within these ranges, larger particle sizes are preferred.

Typical timescales for flavour release are from 1 to 20 seconds for a desirable, full-fat initial taste and from 20 to 60 seconds for a desirable, full-fat aftertaste, depending on the way you measure it.

The inventors of the claimed emulsion were surprised to find that the presence of gel particles delays the release of flavour molecules; this is surprising because the flavour molecules are of a size suitable for diffusing through the gel matrix of the particles. It is therefore understood that, in the present invention, the gel particles do not encapsulate the flavour molecules in the traditional sense, since the flavour molecules are not trapped within the gel particles.

Without wishing to be bound by theory, the inventors believe that the gel particles act as a static region within the mobile aqueous phase of the emulsion. When the emulsion is eaten, the aqueous phase is rapidly swept by oral fluids such as saliva, whilst the gel particles remain intact for a time which is greater than that for the aqueous phase before they are broken down in the mouth. A flavour molecule located in a gel particle diffuses therethrough as normal. By the time it has reached the surface of the gel particle to be swept by the oral fluids, a delay has occurred. Hence, flavour molecules located in gel particles experience delayed release relative to flavour molecules in the aqueous phase.

In the emulsion, the dispersed fat phase is normally in the form of liquid oil droplets located in the gel particles. As many important flavour molecules are lipophilic (fat-soluble) they have a preference for solubilising in the oil droplets. The rationale behind this approach is that in o/w emulsions the release of lipophillic flavours occurs in the sequence oil → water → air. It is therefore possible to control the release of lipophillic flavours by creating barriers around the oil droplets which hinder their release into the aqueous phase. Microstructured emulsions do this by increasing the diffusional pathway and reducing the rate at which lipophillic flavours are released into the aqueous phase.

The effects of the present invention are clearly a result of kinetically-controlled flavour release, rather than traditional thermodynamically-controlled flavour release.

In accordance with the present invention there is also provided a process for the preparation of a non-frozen low-fat microstructured food emulsion comprising the steps of
a) admixing fat and a gel-forming biopolymer to form a first liquid phase
b) adding the first liquid phase to a second liquid phase which promotes gel formation of the biopolymer to form gel particles having particles of fat located therein
c) mixing the gel particles with an aqueous phase and fat-soluble flavour molecules to form an aqueous-continuous emulsion.

Optionally, the first liquid phase is emulsified prior to step b. In step b, the first liquid phase may be injected into the second liquid phase. Alternatively, in step b, the first liquid phase may be sprayed on to the second liquid phase.

The second liquid phase may have a lower temperature than the first liquid phase in order to effect gel formation. Alternatively, the second liquid phase may react with the biopolymer in the first liquid phase in order to effect gel formation.

In one example, an emulsion of agar and oil is injected into a cooled stream of xanthan gum in a low speed mixer; the lower temperature of the xanthan gum promotes gelation of the agar. The resulting gel particles may be used to prepare a low-fat dressing.

In another example, an emulsion of sodium alginate and oil is coextruded with air through a nozzle into a bath of calcium chloride solution; the calcium ions react with the alginate to form particles of calcium alginate gel. The size of the gel particles may be determined by the flow rate of the coextrudate. The resulting gel particles may be used to prepare a low-fat spread.

An emulsion according to the present invention may also be prepared using one of the following processes.
1) Shear Gel Method
   Heat and homogenise the emulsion ingredients to form an oil in water emulsion. Cool the emulsion under shear.
2) Multiple Emulsion Method
   Heat and homogenise the emulsion ingredients to form an oil in water in oil (duplex) emulsion. Cool the emulsion under shear and remove the outer oil phase.

When preparing a low-fat emulsion in accordance with the present invention, flavour components need minimal rebalancing to account for the low phase volume of fat. Also, critical flavours, which are normally fat-soluble and therefore particularly prone to uncontrolled release in low fat emulsions, are released according to their "full-fat" timescale, thereby improving the perception of their flavour.

The present invention provides means for controlling the transfer rates, including the rate of release, of flavour molecules in an emulsion, thereby allowing manipulation of the flavour release profile of low-fat emulsions. It also provides means for manipulating the texture of low-fat emulsions. Hence, low-fat emulsions can be prepared which have the taste and mouthfeel of full-fat emulsions. The present invention achieves this without recourse to an encapsulating coating which must be heated or solubilised in order to release encapsulated flavours.

### Detailed Description of the Invention

Examples of the products and processes of the invention will now be described to illustrate, but not to limit, the invention, with reference to the accompanying figures, in which:
figure 1 is a graph of flavour intensity in area counts (y axis) against time in seconds (x axis) for four dressings containing ethyl hexanoate, wherein two of the dressings contain calcium alginate gel particles;
figure 2 is a graph of flavour intensity in area counts (y axis) against time in seconds (x axis) for four dressings . containing nonanone, wherein two of the dressings contain calcium alginate gel particles;
figure 3 is a graph of flavour intensity in area counts (y axis) against time in seconds (x axis) for five dressings containing ethyl hexanoate, wherein the dressings contain calcium alginate gel particles of differing sizes;
figure 4 is a graph of flavour intensity in area counts (y axis) against time in seconds (x axis) for five dressings containing nonanone, wherein the dressings contain calcium alginate gel particles of differing sizes;
figure 5 is a graph of flavour intensity in area counts (y axis) against time in seconds (x axis) for two dressings containing ethyl hexanoate, wherein the dressings contain agar gel particles.
figure 6 is a graph of flavour intensity in area counts (y axis) against time in seconds (x axis) for two zero-fat spreads containing ethyl hexanoate, wherein the spreads contain calcium alginate gel particles.
figure 7 is a graph of flavour intensity in area counts (y axis) against time in seconds (x axis) for three spreads (two zero-fat and one 40% fat) containing ethyl hexanoate. One of the zero-fat spreads contains sodium alginate gel particles.
figure 8 is a graph of flavour intensity in area counts (y axis) against time in seconds (x axis) for three spreads (two zero-fat and one 40% fat) containing heptan-2-one. One of the zero-fat spreads contains sodium alginate gel particles.

### Example 1

1.1 A sodium alginate emulsion containing 10 wt% sunflower oil emulsified with 0.5 wt% whey protein concentrate was added dropwise into a calcium chloride solution whilst stirring the solution. Particles of calcium alginate gel, approximately 3mm in diameter and containing droplets of the oil, were formed.

A low fat dressing was prepared omitting the fat from the formulation; calcium alginate particles containing the oil were stirred into the dressing to give 10 wt% calcium alginate gel particles and an oil level of 1 wt%. The flavour molecule ethyl hexanoate was added to the dressing and left for 48 hours to equilibrate in a sealed bottle.

A flavour intensity over time profile was plotted by passing the exhaled breath of a consumer of the dressing into a mass spectrometer. The resulting profile is shown in line 2 of figure 1.

1.2 A traditional low-fat dressing was prepared using xanthan gum and sunflower oil, to give an oil level of 1 wt%. The flavour molecule ethyl hexanoate was added to the dressing and left for 48 hours to equilibrate in a sealed bottle.

A flavour intensity over time profile was plotted; line 4 of figure 1 is the resulting profile.

1.3 A traditional full-fat dressing was prepared using xanthan gum and sunflower oil, to give an oil level of 55 wt%. The flavour molecule ethyl hexanoate was added to the dressing and left for 48 hours to equilibrate in a sealed bottle.

A flavour intensity over time profile was plotted; line 6 of figure 1 is the resulting profile.

1.4 A low-fat dressing was prepared using sunflower oil, to give an oil level of 1 wt%. Calcium alginate gel particles were prepared as described above but in the absence of oil. These gel particles were stirred into the dressing to give 10 wt% calcium alginate gel particles. The flavour molecule ethyl hexanoate was added to the dressing and left for 48 hours to equilibrate in a sealed bottle.

A flavour intensity over time profile was plotted; line 8 of figure 1 is the resulting profile.

### Results

From line 4 of figure 1 it can be seen that in the traditional low-fat dressing, with no particles of calcium alginate gel present, the flavour molecules of ethyl hexanoate are rapidly released, resulting in a very high peak of flavour intensity in the early stages of oral processing. Rapid dissipation of the flavour intensity follows.

A similar profile is seen in line 8 even though particles of calcium alginate gel are present; this is because the oil droplets are not located within the gel particles.

From line 6 it can be seen that the full-fat dressing exhibits a more gradual build up of flavour to a lower peak of flavour intensity; the flavour also dissipates more slowly.

From line 2 it can be seen that the low-fat dressing of the present invention has a flavour release profile which is more similar to that of the full-fat dressing than to that of the. traditional low-fat dressing.

### Example 2

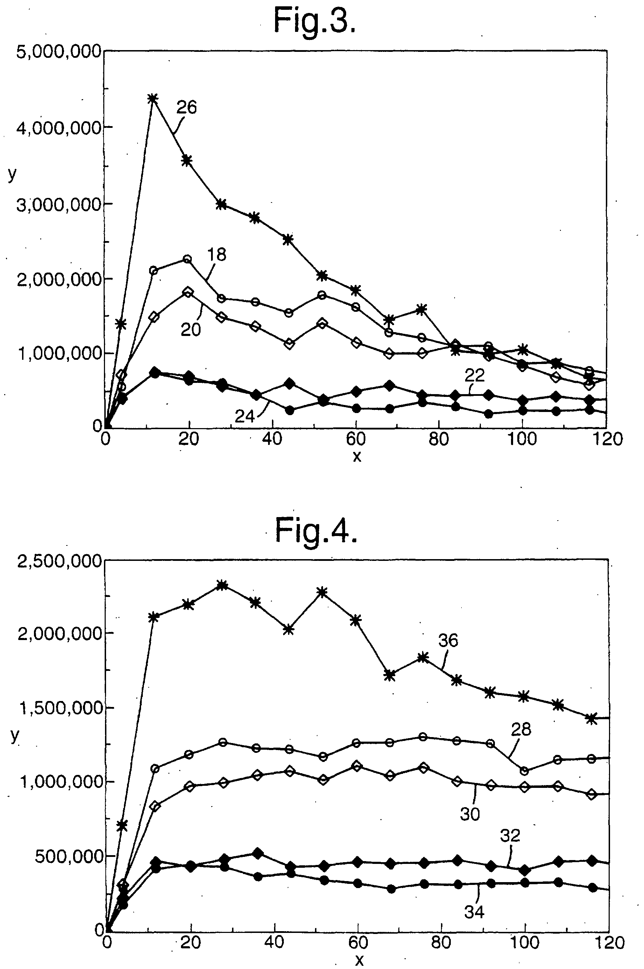

The methods of example 1 were repeated but using nonanone rather than ethyl hexanoate as the flavour molecule marker. In figure 2, which shows the flavour intensity over time profiles, line 10 refers to the low-fat dressing of the present invention, line 12 refers to the traditional low-fat dressing, line 14 refers to the traditional full-fat dressing and line 16 refers to the low-fat dressing prepared with the calcium alginate gel particles which do not contain droplets of the oil.

### Results

From line 12 it can be seen that in the traditional low-fat dressing, with no particles of calcium alginate gel present, the flavour molecules of nonanone are rapidly released, resulting in a very high peak of flavour intensity in the early stages of oral processing. Rapid dissipation of the flavour intensity follows.

A similar profile is seen in line 16 even though particles of calcium alginate gel are present; this is because the oil droplets are not located within the gel particles.

From line 14 it can be seen that the full-fat dressing exhibits a more gradual build up of flavour to a lower peak of flavour intensity; the flavour also dissipates more slowly.

From line 10 it can be seen that the low-fat dressing of the present invention has a flavour release profile which is comparable with that of the full-fat dressing.

From a comparison of figure 1, line 4 and figure 2, line 12 it can be seen that the release of ethyl hexanoate from a traditional low-fat dressing is faster than the release of nonanone from a traditional low-fat dressing; this is because ethyl hexanoate is more volatile than nonanone.

### Example 3

A sodium alginate emulsion containing 10 wt% sunflower oil emulsified with 0.5 wt% whey protein concentrate was cosprayed with a stream of air through a fine nozzle into a bath of calcium chloride solution. Particles of calcium alginate gel containing droplets of the oil were prepared. The size of these particles was varied by adjusting the flow. rate of the air.

Four low-fat dressings were prepared as described in example 1.1, one using gel particles having an average diameter of 0.07mm, one using gel particles having an average diameter of 0.16mm, one using gel particles having an average diameter of 0.50mm and one using gel particles having an average diameter of 1.50mm.

A fifth low-fat dressing was prepared as described in example 1.2. No calcium alginate gel particles were present.

For all five dressings, ethyl hexanoate was used as the flavour molecule.

Flavour intensity over time profiles were plotted by passing the exhaled breath of a consumer of the dressings into a mass spectrometer. The resulting profiles are shown in figure 3; line 18 is the profile for the dressing containing gel particles having a diameter of 0.07mm; line 20 is the profile for the dressing containing gel particles having a diameter of 0.16mm; line 22 is the profile for the dressing containing gel particles having a diameter of 0.50mm; line 24 is the profile for the dressing containing gel particles having a diameter of 1.50mm; and line 26 is the profile for the control.

### Results

It is evident from a comparison of the profiles of figure 3 that the rate of flavour release can be controlled via the particle size of the gel; the larger the gel particle size, the slower the rate of flavour release. Moreover, the texture of the dressing can be controlled via the particle size of the gel and its firmness; both factors may contribute to a fatty mouthfeel.

### Example 4

The method of example 3 was repeated except that nonanone was used as the flavour marker.

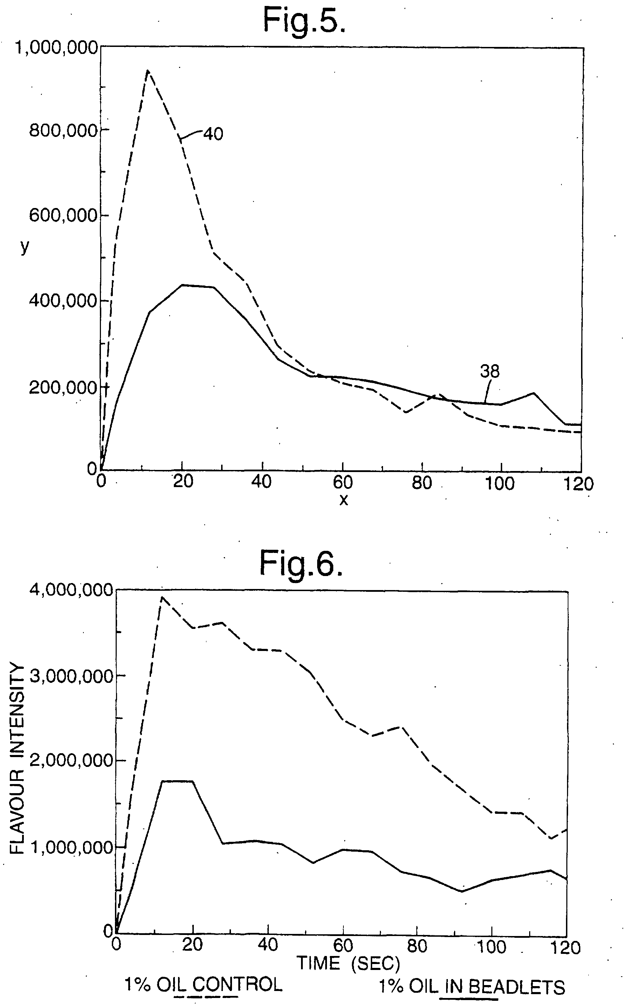

The flavour intensity over time profiles are shown in figure 4; line 28 is the profile for the dressing containing gel particles having a diameter of 0.07mm; line 30 is the profile for the dressing containing gel particles having a diameter of 0.16mm; line 32 is the profile for the dressing containing gel particles having a diameter of 0.50mm; line 34 is the profile for the dressing containing gel particles having a diameter of 1.50mm; and line 36 is the profile for the control.

### Results

In accordance with the results of example 3, it is clear that the larger the gel particle size, the slower the rate of flavour release.

### Example 5

5.1 A dressing was prepared from agar gel particles containing droplets of oil by a continuous micro-votator process. A split stream process was used in which an agar emulsion containing 5 wt% oil was injected into a cooled stream of xanthan gum in a low speed mixer unit. This produced a dispersion of oil-containing gel particles to give an overall oil level of 1 wt%. The flavour molecule ethyl hexanoate was added to the dressing and left for 48 hours to equilibrate in a sealed bottle.

A flavour intensity profile was plotted by passing the exhaled breath of a consumer of the dressings into a mass spectrometer. The resulting profile is shown in line 38 of figure 5.

5.2 A control dressing was prepared using the above micro-votator process except that the oil was added to the xanthan stream and not to the agar stream. The flavour molecule ethyl hexanoate was added to the dressing and left for 48 hours to equilibrate in a sealed bottle.

A flavour intensity over time profile was plotted; line 40 of figure 5 is the resulting plot.

### Results

From a comparison of profiles 38 and 40, it can be seen that the rate of flavour release is slower when the oil droplets are located within the gel particles.

### Example 6 Spreads (1% fat)

The method of example 1 was repeated to make the particles of calcium alginate containing droplets of the oil but the calcium alginate particles were added to a zero fat spread (i.e. a spread containing about 3% fat) to give 10 wt% calcium alginate gel particles and an oil level of 1 wt%.
The flavour molecule ethyl hexanoate was added to the spread and left for 48 hours to equilibrate in a sealed bottle.

A flavour intensity over time profile was plotted and compared to a control 1wt% emulsion in which the oil was dispersed in the continuous phase. The resulting profiles are shown in figure 6.

### Results

It can be seen in the zero-fat spread where the oil is located in the structured continuous phase the flavour molecules of ethyl hexanoate are rapidly released, resulting in a very high peak of flavour intensity in the early stages of oral processing , followed by rapid dissipation of the flavour. Although the continuous phase is highly structured with crystalline maltodextrin it breaks down very rapidly in the mouth, thus allowing the flavour molecules to be released very rapidly.

In the zero-fat spread where the calcium alginate particles containing the oil droplets have been added, the flavour release profile is much lower in initial intensity and does not disappear as rapidly as in the zero-fat spread with the oil outside the beadlets.

### Example 7 Spreads (3% fat level relevent to "zero" fat)

The methods of example 6 were repeated but a sodium alginate emulsion containing 30wt% sunflower oil emulsified with 0.5wt% whey protein concentrate was used. The particles containing oil droplets were added to a zero fat spread to give 10 wt% calcium alginate gel particles and an oil level of 3 wt%. The flavour molecule ethyl hexanoate was added to the spread and left for 48 hours to equilibrate in a sealed bottle.

A traditional fat-continuous spread was prepared using gelatin and sunflower oil, to give an oil level of 40 wt%. The flavour molecule ethyl hexanoate was added to the spread and left for 48 hours to equilibrate in a sealed bottle.

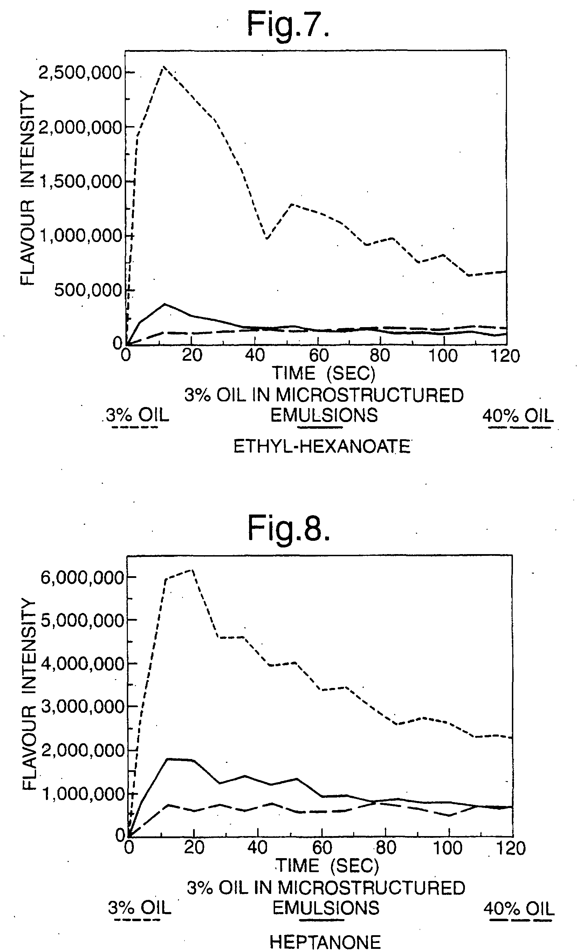

A flavour intensity over time profile was plotted for the zero-fat spread with the added calcium alginate particles containing the oil droplets, and for the full-fat spread and compared to a control 3wt% emulsion in which the oil was dispersed in the continuous phase. The resulting profiles are shown in figure 7.

### Results

It can be seen that for the zero-fat spread in which the oil is outside the calcium alginate particles in the continuous phase the flavour release profile shows a rapid release of flavour resulting in a very high peak of flavour intensity which is then very rapidly dissipated.

For the full-fat spread it can be seen that the flavour release profile shows a more gradual build up of flavour which is at a very low intensity and which is maintained throughout the eating process, shown as a plateau. The profile for the low-fat spread which contains the present invention has a flavour release profile which is more similar to that of the full-fat spread than to that of the low-fat spread control.

### Example 8

The methods of example 7 were repeated but heptan-2-one was used as the flavour molecule marker instead of ethyl hexanoate. This is a less lipophillic flavour and therefore is less soluble in oil than ethyl hexanoate. This means that in a spread at an oil level of 1wt% with the present invention the flavour release profile for heptan-2-one will be very similar to that of a traditional low-fat spread where the oil is located in the aqueous continuous phase.

That is to say the flavour molecules of heptan-2-one will be rapidly released, resulting in a very high peak of flavour intensity, followed by rapid dissipation. However at an oil level of 3 wt% with the present invention the flavour release profile for heptan-2-one will be more similar to that of a full fat spread than that of the zero-fat spread.

A flavour intensity over time profile was plotted for the zero-fat spread with the added calcium alginate particles containing the oil droplets, and for the full-fat spread and compared to a control 3wt% emulsion in which the oil was dispersed in the continuous phase. The resulting profiles are shown in figure 8.

### Results

It can be seen that for the zero-fat spread in which the oil (3wt%) is outside the calcium alginate particles in the continuous phase, the flavour release profile for heptan-2-one shows a rapid release of flavour resulting in a very high peak of flavour intensity which is then very rapidly dissipated.

For the full-fat spread it can be seen that the flavour release profile shows a more gradual build up of flavour which is at a very low intensity and which is maintained throughout the eating process, shown as a plateau. The profile for the zero-fat spread which contains the present invention has a flavour release profile which is matched more closely to that of the full-fat spread than to that of the zero-fat spread control.

### Summary

On the basis of these examples it is evident that, in the present invention, the rate of release of fat-soluble flavour molecules is delayed by creating a microstructure in which a low phase volume of oil droplets is trapped within a biopolymer gel, and flavour molecules are either solubilised in the oil droplets or diffusing through the gel particles. The result is that the flavour perception profile of a full-fat emulsion is created for a low-fat emulsion.

## Claims

1. A non-frozen, low-fat microstructured food emulsion comprising a continuous aqueous phase and a dispersed phase which comprises fat particles, gel particles and fat-soluble flavour molecules, wherein substantially all of the fat particles are located within the gel particles, and wherein at least 35% of the flavour molecules are located in a plurality of the gel particles to thereby delay the rate of release of the flavour molecules from the emulsion.

2. An emulsion according to claim 1, wherein the dispersed phase which comprises fat particles, gel particles and fat-soluble flavour molecules, wherein substantially all of the fat particles are located within the gel particles, and wherein a plurality of the flavour molecules are located in a plurality of the gel particles to thereby delay the rate of release of the flavour molecules from the emulsion.

3. An emulsion as claimed in claim 1 wherein the gel particles are prepared from food-grade gelling biopolymers selected from the group consisting of galactans, galactomannans, glucomannans, galacturonates, glucans, uronates, exopolysaccharides, natural gum exudates, gelatin, and mixtures thereof.

4. An emulsion as claimed in claim 3, wherein the gel particles are prepared from food-grade gelling biopolymers selected from the group consisting of agar, iota-carrageenan, kappa-carrageenan, furcelleran, guar gum, locust bean gum, tara gum, fenugreek, konjac mannan, pectin, starch, alginate, xanthan, gellan, gum acacia, gum arabic, gelatin, and mixtures thereof.

5. An emulsion as claimed in any preceding claim comprising from 0 to 30 wt% fat.

6. An emulsion as claimed in claim 5 comprising less than 10 wt% fat.

7. An emulsion as claimed in claim 6 comprising less than 5 wt% fat.

8. An emulsion as claimed in any preceding claim comprising from 0.1 to 99.0 % by volume of gel particles.

9. An emulsion as claimed in claim 8 comprising from 5.0 to 50.0% by volume of gel particles.

10. An emulsion as claimed in claim 9 comprising from 20.0 to 99.0% by volume of gel particles.

11. An emulsion as claimed in any preceding claim wherein at least 90% of the gel particles have a size of at least 30 micrones and less than 5000 microns.

12. An emulsion as claimed in claim 11 wherein at least 90% of the gel particles have a size of at least 50 and less than 1000 microns.

13. An emulsion as claimed in claim 12 wherein at least 90% of the gel particles have a size of at least 100 to less than 500 microns.

14. A process for the preparation of a non-frozen low-fat microstructured food emulsion comprising the steps of
a) admixing fat and a gel-forming biopolymer to form a first liquid phase
b) adding the first liquid phase to a second liquid phase which promotes gel formation of the biopolymer to form gel particles having particles of fat located therein
c) mixing the gel particles with an aqueous phase and fat-soluble flavour molecules to form an aqueous-continuous emulsion.

15. A process as claimed in claim 14, wherein, in step b, the second liquid phase has a lower temperature than the first liquid phase in order to promote gel formation.

16. A process as claimed in claim 14, wherein, in step b, the second liquid phase reacts with the biopolymer of the first liquid phase in order to promote gel formation.

17. Non-frozen food product containing an emulsion according to claim 1, wherein the food product is a dressing, mayonaise or spread.

## Patentansprüche

1. Nicht-gefrorene, fettarme, mikrostrukturierte Lebensmittelemulsion, umfassend eine kontinuierlich wäßrige Phase und eine disperse Phase, welche Fettpartikel, Gelpartikel und fettlösliche Aromamoleküle umfaßt, wobei im wesentlichen alle Fettpartikel in den Gelpartikeln lokalisiert sind und wobei mindestens 35 % der Aromamoleküle in der Mehrheit der Gelpartikel lokalisiert sind, um die Freisetzungsgeschwindigkeit der Aromamoleküle aus der Emulsion zu verzögern.

2. Emulsion nach Anspruch 1, worin die disperse Phase Fettpartikel, Gelpartikel und fettlösliche Aromamoleküle umfaßt, wobei im wesentlichen alle Fettpartikel in den Gelpartikeln lokalisiert sind und wobei die Mehrheit der Aromamoleküle in der Mehrheit der Gelpartikel lokalisiert sind, um die Freisetzungsrate der Aromamoleküle aus der Emulsion zu verzögern.

3. Emulsion nach Anspruch 1, wobei die Gelpartikel aus Gel-bildenden Biopolymeren mit Lebensmittelqualität, die aus der Gruppe bestehend aus Galactanen, Galactomannanen, Glucomannanen, Galacturonaten, Glucanen, Uronaten, Exopolysacchariden, Naturgummi-Exsudaten, Gelatine und Gemischen davon ausgewählt sind, hergestellt werden.

4. Emulsion nach Anspruch 3, wobei die Gelpartikel aus Gel-bildenden Biopolymeren mit Lebensmittelqualität, die aus der Gruppe bestehend aus Agar, Jota-Carrageenan, Kappa-Carrageenan, Furcelleran, Guargummi, Johannisbrotgummi, Taragummi, Fenugreek, Konjakmannan, Pektin, Stärke, Alginat, Xanthan, Gellan, Akaziengummi, Gummi arabicum, Gelatine und Gemischen der genannten ausgewählt sind, hergestellt werden.

5. Emulsion nach einem der vorangehenden Ansprüche, die 0 bis 30 Gew.-% Fett umfaßt.

6. Emulsion nach Anspruch 5, die weniger als 10 Gew.-% Fett umfaßt.

7. Emulsion nach Anspruch 6, die weniger als 5 Gew.-% Fett umfaßt.

8. Emulsion nach einem der vorangehenden Ansprüche, die 0,1 bis 99,0 Vol.-% Gelpartikel umfaßt.

9. Emulsion nach Anspruch 8, die 5,0 bis 50,0 Vol.-% Gelpartikel umfaßt.

10. Emulsion nach Anspruch 9, die 20,0 bis 99,0 Vol.-% Gelpartikel umfaßt.

11. Emulsion nach einem der vorangehenden Ansprüche, wobei mindestens 90 % der Gelpartikel eine Größe von mindestens 30 µm und weniger als 5000 µm haben.

12. Emulsion nach Anspruch 11, wobei mindestens 90 % der Gelpartikel eine Größe von mindestens 50 und weniger als 1000 µm haben.

13. Emulsion nach Anspruch 12, wobei mindestens 90 % der Gelpartikel eine Größe von mindestens 100 bis weniger als 500 µm haben.

14. Verfahren zur Herstellung einer nicht-gefrorenen, fettarmen, mikrostrukturierten Lebensmittelemulsion, umfassend die Schritte:
a) Zumischen von Fett zu einem Gel-bildenden Biopolymer unter Bildung einer ersten flüssigen Phase;
b) Zusetzen der ersten flüssigen Phase zu einer zweiten flüssigen Phase, welche die Gelbildung des Biopolymers unter Bildung von Gelpartikeln, mit darin lokalisierten Fettpartikeln, begünstigt;
c) Vermischen der Gelpartikel mit einer wäßrigen Phase und fettlöslichen Aromamolekülen unter Bildung einer Emulsion mit kontinuierlicher wäßriger Phase.

15. Verfahren nach Anspruch 14, wobei in Schritt b) die zweite flüssige Phase eine niedrigere Temperatur als die erste flüssige Phase hat, um die Gelbildung zu unterstützen.

16. Verfahren nach Anspruch 14, wobei in Schritt b) die zweite flüssige Phase mit dem Biopolymer der ersten flüssigen Phase reagiert, um die Gelbildung zu unterstützen.

17. Nicht-gefrorenes Lebensmittelprodukt, das eine Emulsion nach Anspruch 1 enthält, wobei das Lebensmittelprodukt ein Dressing, eine Mayonnaise oder ein Aufstrich ist.

## Revendications

1. Emulsion alimentaire micro-structurée non congelée et à faible teneur en matières grasses comprenant une phase aqueuse continue et une phase dispersée comprenant des particules de matière grasse, des particules de gel et des molécules d'arôme solubles dans la matière grasse, dans laquelle les particules de matière grasse sont substantiellement toutes localisées à l'intérieur des particules de gel, et dans laquelle au moins 35 % des molécules d'arôme sont localisées dans une pluralité des particules de gel afin ainsi de retarder le rythme de libération des molécules d'arôme à partir de l'émulsion.

2. Emulsion selon la revendication 1, dans laquelle la phase dispersée qui comprend des particules de matière grasse, des particules de gel et des molécules d'arôme solubles dans la matière grasse, dans laquelle substantiellement toutes les particules de matière grasse sont localisées à l'intérieur des particules de gel, et dans laquelle une pluralité des molécules d'arôme sont localisées dans une pluralité de particules de gel afin de retarder ainsi le rythme de libération des molécules d'arôme à partir de l'émulsion.

3. Emulsion selon la revendication 1, dans laquelle les particules de gel sont préparées à partir de bio polymères formant du gel et de qualité alimentaire, sélectionnés à partir du groupe composé des galactanes, des galactomannanes, des glucomannanes, des galacturonates, des glucanes, des uronates, des exopolysaccharides, des exsudats de gomme naturelle, de la gélatine et des mélanges de ceux-ci.

4. Emulsion selon la revendication 3, dans laquelle les particules de gel sont préparées à partir de bio polymères formant un gel et de qualité alimentaire sélectionnés à partir du groupe composé de l'agar, des iota-carragheenanes, des kappa-carragheenanes, du furcellerane, de la gomme de guar, de la gomme de caroube, de la gomme de tara, du fenugrec, du mannane de konjac, de la pectine, de l'amidon, de l'alginate, du xanthane, du gellane, de la gomme d'acacia, de la gomme arabique, de la gélatine et des mélanges de ceux-ci.

5. Emulsion selon l'une quelconque des revendications précédentes comprenant de 0 à 30 % en poids de matière grasse.

6. Emulsion selon la revendication 5, comprenant moins de 10 % en poids de matière grasse

7. Emulsion selon la revendication 6, comprenant moins de 5 % en poids de matière grasse.

8. Emulsion selon l'une quelconque des revendications précédentes comprenant de 0,1 à 99,0 % en volume de particules de gel.

9. Emulsion selon la revendication 8, comprenant de 5,0 à 50,0 % en volume de particules de gel.

10. Emulsion selon la revendication 9, comprenant de 20,0 à 99,0 % en volume de particules de gel.

11. Emulsion selon l'une quelconque des revendications précédentes dans laquelle au moins 90 % des particules de gel ont une taille d'au moins 30 micron et inférieure à 5.000 microns.

12. Emulsion selon la revendication 11, dans laquelle au moins 90 % des particules de gel ont une taille d'au moins 50 microns et inférieure à 1000 microns.

13. Emulsion selon la revendication 12, dans laquelle au moins 90 % des particules de gel ont une taille d'au moins 100 et inférieure à 500 microns.

14. procédé de préparation d'une émulsion alimentaire micro-structurée non congelée et à faible teneur en matières grasses comprenant les étapes consistant à :
a) mélanger la matière grasse et un bio polymère formant un gel afin de former une première phase liquide ;
b) ajouter la première phase liquide à une seconde phase liquide qui promeut la formation du gel par le bio polymère afin de former des particules de gel dans lesquelles sont localisées des particules de matière grasse ;
c) mélanger les particules de gel avec une phase aqueuse et des molécules d'arôme solubles dans la matière grasse afin de former une émulsion aqueuse continue.

15. Procédé selon la revendication 14, dans lequel dans l'étape b, la seconde phase liquide a une température inférieure à la température de la première phase liquide afin de promouvoir la formation du gel.

16. Procédé selon la revendication 14, dans lequel, dans l'étape b, la seconde phase liquide réagit avec le bio polymère de la première phase liquide afin de promouvoir la formation du gel.

17. Produit alimentaire non congelé contenant une émulsion selon la revendication 1, dans lequel le produit alimentaire est une sauce pour salade, une mayonnaise ou une pâte à tartiner.
